(19) Europäisches Patentamt
European Patent Office
Office européen des brevets

(11) **EP 1 995 506 A2**

(12) **EUROPEAN PATENT APPLICATION**

(43) Date of publication:
**26.11.2008 Bulletin 2008/48**

(51) Int Cl.:
***F16L 37/092*** (2006.01)

(21) Application number: **07023444.8**

(22) Date of filing: **04.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **23.05.2007 JP 2007136535**

(71) Applicant: **Higashio Mech Co., Ltd.**
**Kawachinagano-shi,**
**Osaka (JP)**

(72) Inventors:
• **Fukuyama, Jun**
**Kawachinagano-shi**
**Osaka (JP)**
• **Takada, Tamotsu**
**Kawachinagano-shi**
**Osaka (JP)**

(74) Representative: **HOFFMANN EITLE**
**Patent- und Rechtsanwälte**
**Arabellastrasse 4**
**81925 München (DE)**

(54) **Pipe joint**

(57) A pipe joint having a hollow chamber (3) of ring, to which an end portion (1) of a pipe (P) is inserted, opening outward in an axis direction. A pipe-guiding ring (40) is disposed within the hollow chamber (3). The pipe-guiding ring (40) is provided with a straight portion and a guiding tapered portion on an inner peripheral face (43).

Fig. 1

**Description**

This invention relates to a pipe joint.

As a conventional pipe joint with which a worker can conduct piping work efficiently without tools such as a wrench in a working site, a pipe joint, with which connection work can be automatically conducted by insertion of an end portion of a pipe, has been already proposed by the inventors of the present invention (refer to Japanese Patent Provisional Publication No. 2004-324858, for example).

However, in the above-mentioned conventional pipe joint, an inner peripheral corner portion on the end portion of the connected pipe must be chamfered, and this makes the piping work laborsome and inefficient. And, the above-mentioned pipe joint has an insertion cylinder portion to be inserted to the connected pipe as to touch the inner peripheral face of the end portion of the pipe, and the insertion cylinder portion needs a sealing material having a specific configuration. That is to say, when an 0-ring of ordinary configuration is used as the sealing material, the 0-ring may be twisted and brought out of a sealing groove, and may be damaged as the pipe not sufficiently chamfered is inserted.

It is therefore an object of the present invention to provide a pipe joint with which smooth insertion is possible even if the chamfer on the inner peripheral corner portion on the end portion of the connected pipe is omitted, and the sealing material such as an ordinary 0-ring is applied to the insertion cylinder portion without generation of damage and falling out of the sealing groove. And, it is another object to make the outer dimension of the pipe joint small (compact), and to make assembly of the construction parts easy. And, it is further object to improve sealability by making fastening portion and compression ratio (against the inner diameter of the pipe) of the sealing material such as the above 0-ring fit to the sealing groove on the insertion cylinder portion sufficiently large.

These objects are solved according to the present invention by pipe joint including features of claim 1. Furthermore detailed embodiments are described in the dependent claims 2, 3, and 4.

The present invention will be described with reference to the accompanying drawings, in which:

Figure 1 is an explanatory cross-sectional view showing an embodiment of the present invention;
Figure 2 is a functional explanatory cross-sectional view of a principal portion;
Figure 3 is a functional explanatory cross-sectional view of a principal portion;
Figure 4 is an enlarged cross-sectional view of a principal portion of Figure 1;
Figure 5A is a whole cross-sectional view of a pipe-guiding ring;
Figure 5B is an enlarged cross-sectional view of a principal portion of the pipe-guiding ring;
Figure 6 is a front view of a stop ring;
Figure 7 is a cross-sectional side view of the stop ring;
Figure 8 is an enlarged cross-sectional view of a principal portion; and
Figure 9 is an enlarged functional explanatory view of a principal portion.

Preferred embodiments of the present invention will I now be described with reference to the accompanying drawings.

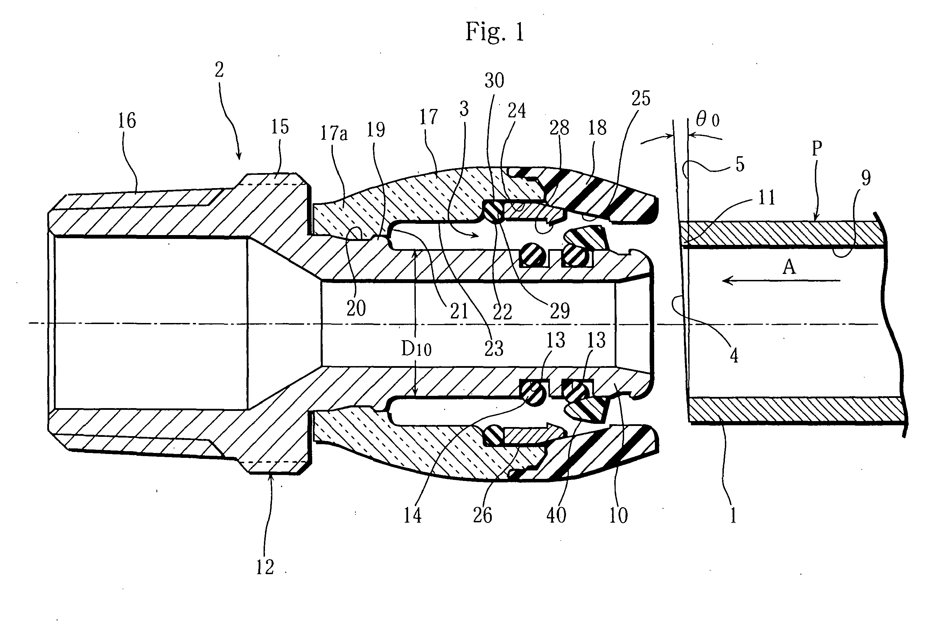

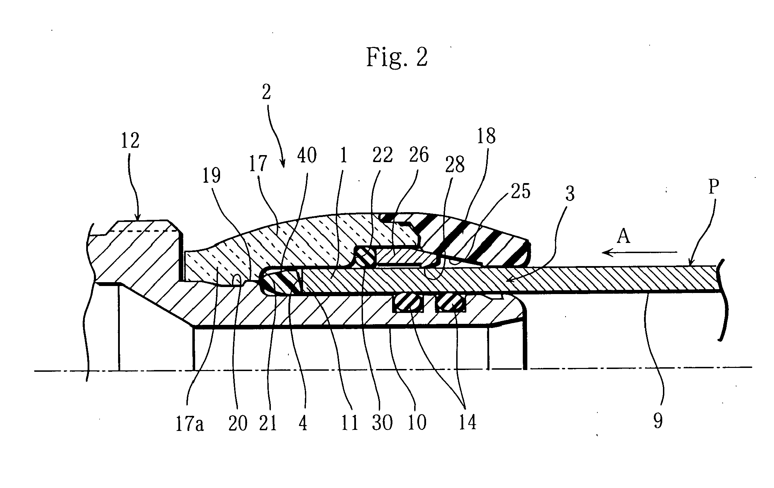

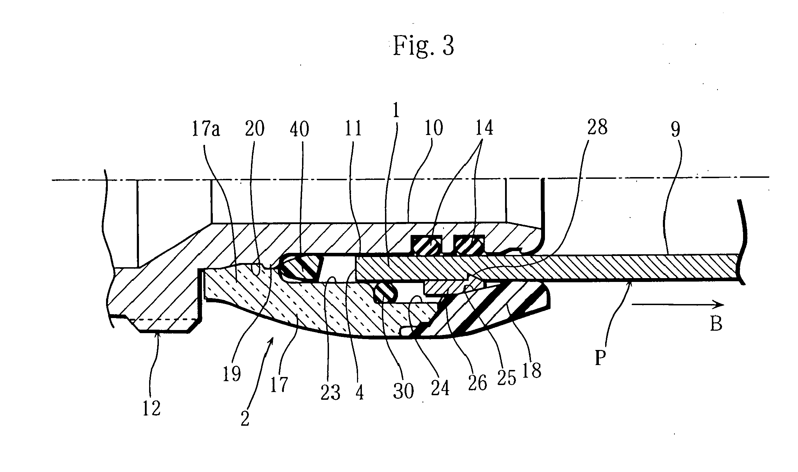

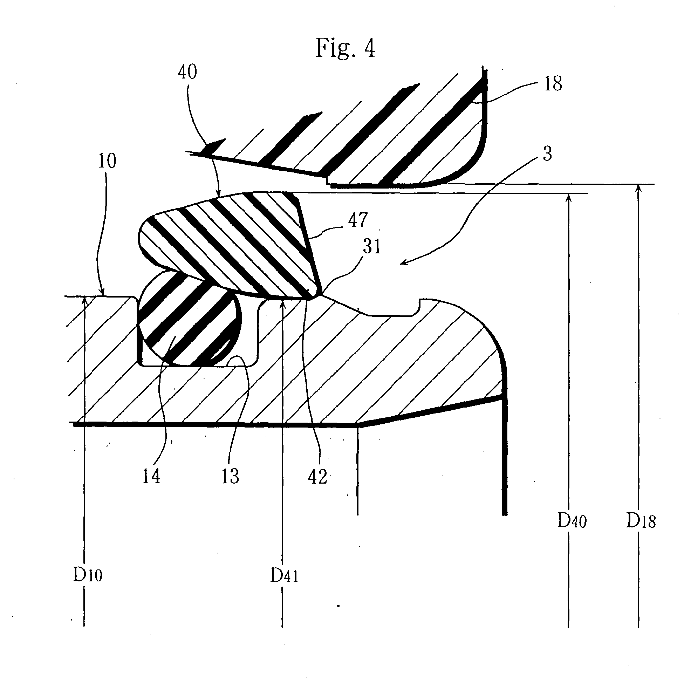

In an embodiment shown in Figures 1 through 4, an unconnected state of a pipe P to be connected is shown in Figure 1, a state, in which insertion of the pipe P in an arrow A direction is (almost) completed, is shown in Figure 2, and figure 3 shows a state in which the pipe P (receiving drawing force) is being drawn out in an arrow B direction. Figure 4 is an enlarged view of a principal portion of Figure 1.

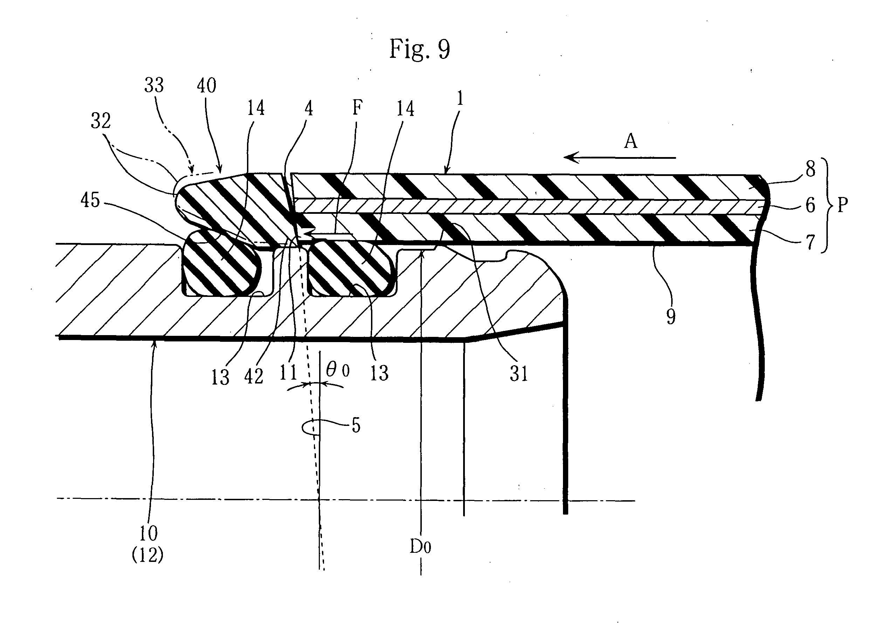

This piping construction composed of a pipe joint 2 and the pipe P is, for example, used for water supply to flow cool and warm water. And, the pipe P, as shown in Figure 9, is composed of a metal inner layer 6 and an inner layer 7 and an outer layer 8 of plastic such as crosslinked-PE resin and polyethylene layered inside and outside. As described above, a metal-plastic combined pipe (metal-reinforced plastic pipe) as the connected pipe P can be applied to the pipe joint 2 relating to the present invention. The pipe P is shown simplified (layered state is omitted) in Figures 1 through 3.

A mark 3 represents a hollow chamber of ring (of circular concave groove), opening to outer directions from an axis, to which an end portion 1 of the pipe P is inserted. A tip end face 4 of the pipe P is cut with an inclination of micro angle $\theta_0$ to an axis-orthogonal face 5 in Figure 1 and Figure 9. Further, chamfering is omitted on a corner portion (on an inner peripheral end edge) 11 between the tip end face 4 of the pipe P and an inner peripheral face 9. That is to say, the tip end face 4 is formed by cutting the pipe P on the axis-orthogonal face (with a cutting device) and chamfering on inner and outer faces is omitted.

A mark 10 represents an insertion cylinder portion forming a part of a joint main body 12 on which two sealing grooves 13 are formed and generally and widely used sealing materials 14 such as 0-rings are fit to the grooves 13 (in Figures). The sealing material 14 tightly fits to the inner peripheral face 9 of the end portion 1 of the inserted pipe P to seal as shown in Figure 2 and Figure 3.

The joint main body 12 is generally made of metal. Although a nipple type main body, having the above-mentioned insertion cylinder portion 10, a hexagonal head portion 15, and a tapered male screw portion 16, is shown in Figure 1, the configurations of the main body such as elbow type, Tee type, etc. can be freely chosen.

A mark 17 represents a cylindrical cover member and a mark 18 represents a cylindrical cap. A stopping small convex ridge 19 is formed on a base portion of the insertion cylinder portion 10 near the hexagonal head portion 15 of the joint main body 12 to form a fitting shallow groove portion 20 to which an inner end portion 17a of the cylindrical cover member 17 is fit (connected) as to be rotatable. The cylindrical cover member 17 is preferably made of transparent plastic. And, the inner configuration of the cylindrical cover member 17 forms a first hole portion and a second hole portion 24 of which inner diameter increases gradually toward outside in the axis direction with a first staged portion 21 and a second staged portion 22. To fit the cylindrical cover member 17 and the cylindrical cap 18 each other, a peripheral notched portion is formed on one (the cover member 17 in Figures), an inner peripheral notched portion is formed on the other (the cylindrical cap 18 in Figures), and the both members are united by ultrasonic welding (fusion), etc.

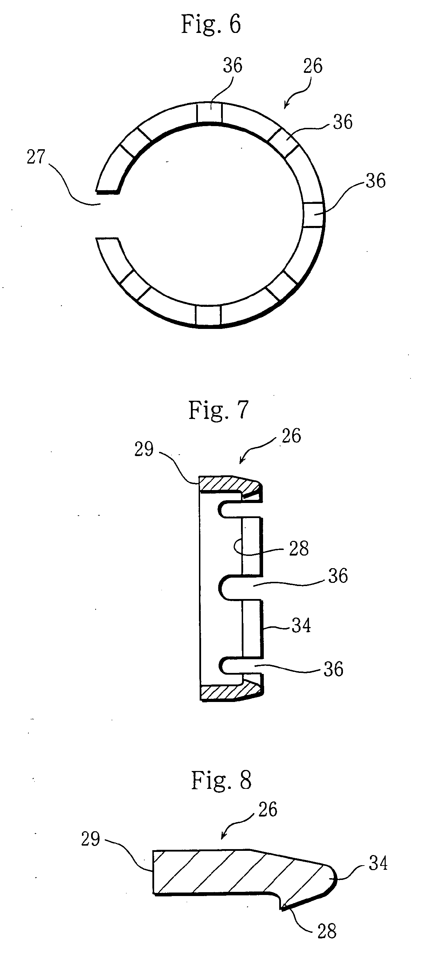

A tapered face portion 25 for contraction diminishing toward outside in the axis direction is formed on the inner peripheral face of the cylindrical cap 18, namely, the above hollow chamber of ring 3 is provided with the tapered face portion 25 for contraction diminishing toward outside in the axis direction. A stop ring 26, having a slit 27 on the periphery and having claws 28 to bite the peripheral face of pipe, is disposed in the hollow chamber 3 as shown in Figures 6 through 8. The stop ring 26 is preferably made of plastic.

And, a backup elastic ring 30, elastically pushing the stop ring 26 outward in the axis direction (to the right side in Figure 1 and Figure 2) to make the stop ring 26 contact the tapered face portion 25 for contraction, is disposed in the ring hollow chamber 3.

Concretely, an 0-ring of rubber is appropriate as the backup elastic ring 30. An inner end face 29 of the stop ring 26 is formed on the axis-orthogonal face, and the elastic ring 30 composed of an 0-ring is set (disposed) between the second staged portion 22 and the inner end face 29.

To describe further, the elastic ring 30 is disposed within a range from the large-diameter second hole portion 24 of the cover member 17 to a large-diameter side of the tapered face portion 25 of the cap 18 under the uninserted state of the pipe shown in Figure 1 and the state just after the pipe insertion shown in Figure 2.

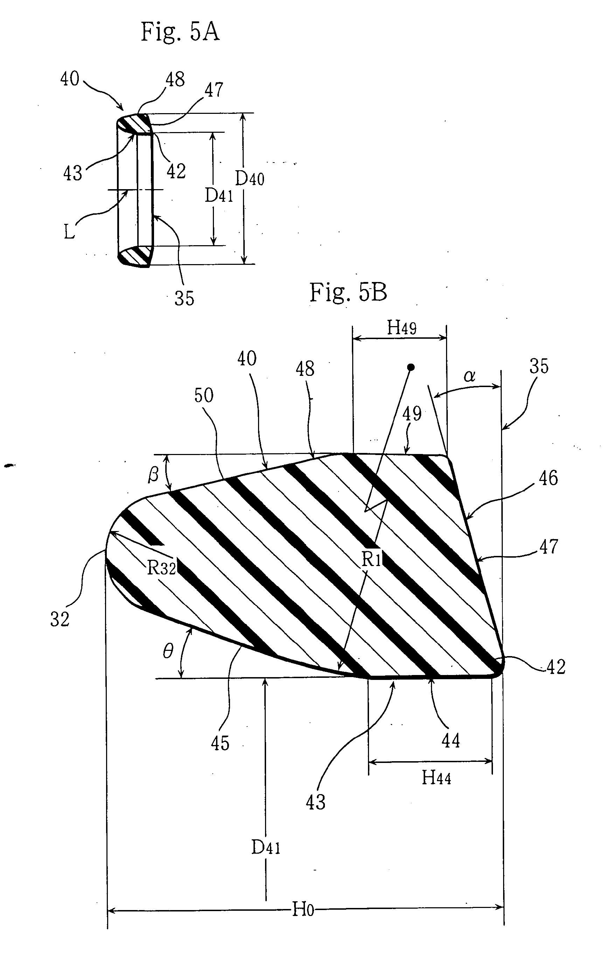

A mark 40 represents a pipe-guiding ring having an outer diameter dimension $D_{40}$ slightly smaller than a (minimum) inner diameter dimension $D_{18}$ of the cylindrical cap 18 on the opening end side. The pipe-guiding ring 40 is inserted to the hollow chamber 3 from the outside in the axis direction and held as to fit to the insertion cylinder portion 10 as shown in Figure 1 and Figure 4. The pipe-guiding ring 40 is made of plastic such as PE, PP, etc. and formed as a closed ring (refer to Figures 5A and 5B).

A positioning small convex ridge 31 is formed on a near (outer) portion of the sealing groove 13 on the outer side in the axis direction on the insertion cylinder portion 10 of the joint main body 12. The outer diameter dimension of the small convex ridge 31 is set to be slightly larger than an inner diameter dimension $D_{41}$ of the pipe-guiding ring 40. An inner peripheral end edge (inner corner portion) 42 of the pipe-guiding ring 40 hitches to the small convex ridge 31 for positioning as shown in Figure 1 and Figure 4. The sealing material 14 such as an 0-ring is co-working with the positioning. That is to say, the sealing material 14, disposed near the small convex ridge 31 in the axis direction, elastically contacts and presses the inner peripheral face of the pipe-guiding ring 40 toward the small convex ridge 31 to keep the pipe-guiding ring 40 on an accurate position to prevent falling, and the end portion 1 of the pipe P simply cut (without chamfering) is guided as to be inserted smoothly without damaging the sealing materials 14 (described later).

The pipe-guiding ring 40 has a cross-sectional configuration in which an inner peripheral face 43 has a straight portion 44 on the outer side in the axis direction and a guiding tapered portion 45 on the inner side in the axis direction. And, an outer end face 46 (directed to the outer side in the axis direction) is formed on a sloped face 47 of which peripheral side is inclined inward in the axis direction to the axis-orthogonal face 35 with a predetermined angle $\alpha$. The predetermined angle $\alpha$ is preferably 8° to 20°.

To describe further in detail, the straight portion 44 and the outer end face 46 (the sloped face 47) are connected by the very small R-shaped corner portion (the inner peripheral end edge) 42, and the straight portion 44 and the pipe-guiding ring 40 are connected with a large radius of curvature $R_1$. The straight portion 44 is parallel to the axis L, and an inclination angle $\theta$ of the guiding tapered portion 45 against the axis L is 10° to 30°. Especially, it is preferable to set the inclination angle $\theta$ 15° to 25°. When the angle $\theta$ is less than the lower limit, a dimension Ho in the axis direction (width dimension) becomes excessive, the hollow chamber 3 becomes large in the axis direction, and the pipe joint is prevented from being compact thereby. On the contrary, when the the angle $\theta$ is more than the upper limit, resistance in guiding rapidly increases.

And, it is preferable to set a dimension $H_{44}$ of the straight portion 44 in the axis direction to be 30% to 45% of the width dimension H o . When the dimension $H_{44}$ is less than the lower limit, it is difficult to keep a stable posture in the waiting state in Figure 4 and in the inward movement in the axis direction. On the contrary, when the dimension $H_{44}$ is over the upper limit, the guiding tapered portion 45 can not be formed with sufficient dimension in the axis direction without making the width dimension $H_0$ excessive.

A peripheral face 48 of the pipe-guiding ring 40 has a straight portion 49 on the outer side in the axis direction and a tapered portion 50 on the inner side in the axis direction. The straight portion 49 is parallel to the axis L, namely, formed parallel to the straight portion 44 on the inner side. And, the tapered portion 50 diminishes inward in diameter and a relation of $\beta < \theta$ is fulfilled when an inclination angle $\beta$ against the axis L is 8° to 25 °. And, a dimension $H_{49}$ of the straight portion 49 in the axis direction is set to be 18% to 38% of the width dimension Ho .

And, an inner end portion 32 has an R-shaped round configuration of radius of curvature $R_{32}$ which is set within the range of the following formula.

$$0.20 \times (D_{40} - D_{41}) \leqq R_{32} \leqq 0.30 \times (D_{40} - D_{41})$$

When the radius of curvature $R_{32}$ is less than the lower limit, the width dimension Ho becomes unnecessarily excessive. On the contrary, the radius of curvature $R_{32}$ is over the upper limit, smooth inward movement becomes difficult.

As shown in Figure 1 and Figure 4, the inner dimension $D_{41}$ is set to be same as or slightly larger than the outer diameter dimension $D_{10}$ of the insertion cylinder portion 10 and smaller than the outer diameter dimension of the small convex ridge 31 as to certainly hold the pipe-guiding ring 40 in the uninserted state of the pipe.

When the pipe P is inserted to the hollow chamber 3 in the arrow A direction as shown in Figure 1, the tip end face 4 of the pipe P contacts the (waiting) pipe-guiding ring 40, held on the determined position in the axis direction by the (outermost) sealing material 14 and the small convex ridge 31 as shown in Figure 4, and pushes the pipe-guiding ring 40 inward in the axis direction as shown in Figure 9.

Even if chamfering on the corner portion 11 (of the tip end face 4) of the end portion 1 of the pipe P is omitted, the pipe-guiding ring 40 slides and pushes the sealing material 14 into the sealing groove 13 (in radially inward direction) just before the acute corner portion 11 passes over the periphery of the sealing material 14 to artfully prevent the corner portion 11 from touching the sealing material 14.

The pipe-guiding ring 40 having the inward guiding tapered portion 45 smoothly pushes the sealing material 14 into the sealing groove 13 (in radially inward direction) as the corner portion 11 passes over the periphery of the sealing material 14 without contact. Therefore, the sealing material is not damaged by the corner portion 11 of the simply cut end portion 1, and effectively prevented from falling out of the sealing groove 13.

Even if the fastening portion and compression ratio (against the inner periphery of the pipe P) of the sealing material 14 such as an 0-ring are set to be large and rather large portion of the peripheral face of the sealing material 14 protrudes from the sealing groove 13 under the uninserted state of the pipe, the end portion 1 of the pipe P can pass over the sealing material 14 smoothly pressed by the guiding tapered portion 45, and sealability under the completed state of piping (connection) can be remarkably improved thereby.

Further, as shown in Figure 9, the corner portion (inner peripheral end edge) 11 between the tip end face 4 of the pipe P and the inner peripheral face 9, corresponding to the inner peripheral end edge (corner portion) 42 of the pipe-guiding ring 40, presses the inner peripheral end edge 42 (as shown with an arrow F) to generate slight twisting rotation on the pipe-guiding ring 40 as shown with a two-dot broken line 33 in Figure 9, and the pipe-guiding ring 40 easily passes over the sealing material 14 when receiving resistance from the sealing material 14.

And, as shown in Figure 1 and Figure 9, if the cut tip end face 4 of the pipe P inclines to the axis-orthogonal face 5 for the micro angle $\theta_0$ , the pipe-guiding ring 40 does not contact with uniform force on the whole periphery of 360° , and only a range of small central angle within the whole periphery of 360 ° receives large pressing force as shown with the arrow F. However, the pipe-guiding ring 40 has the sloped face 47 with the above-mentioned angle $\alpha$ as described above, receives the pressing force as shown with the arrow F only from the corner portion 11 of the pipe P, smoothly passes over the sealing material 14 with twist (rotation) as shown with the two-dot broken line and without hitching to (sticking to) the sealing material 14 at the inner end portion 32, and guides the pipe inward in the axis direction.

Then, as shown in Figure 2, the pipe P is inserted until the pipe-guiding ring 40 contacts the innermost portion of the hollow chamber 3. This state can be checked by eyes through the cylindrical cover member 17 composed of transparent plastic. It is preferable to color the ring 40 with red, blue, or green to improve the visibility.

In the connected (completed) state shown in figure 2, the stop ring 26 is elastically pushed outward in the axis direction by the elastic ring 30 composed of elastic material such as an 0-ring as to contact on the large diameter side (inner side) of the tapered face portion 25, and the claw 28 lightly contacts the peripheral face of the pipe P to play a role of aiding early biting (role of giving pressure). That is to say, when the pipe P is being drawn in the arrow B direction as shown in Figure 3, the claw 28 can immediately bite (into) the peripheral face of the pipe P. As shown in Figure 3, it is preferable that the position in the axis direction of the biting claw 28 is the position in the axis direction of at least one of the two sealing materials 14 because the stop ring 26 diminishes in diameter to press the pipe P inward in the radial direction as to tightly fit to the sealing material 14 for securing sealability when drawing force works.

The backup elastic ring 30, having a diameter approximately same as the diameter of the stop ring 26 and being disposed as to contact the inner end face 29 of the stop ring 26 to prevent outer dimensions of the cylindrical cover member 17 and the cylindrical cap 18, contributes to compactification.

Next, to additionally describe the stop ring 26 in Figures 6 through 8, contact of foreign metal and corrosion are not caused even if the claw 28 of plastic bites into the compound pipe P and contacts the metal inner layer 6 such as aluminum. And, one unit of the claw 28 generates strong biting force. And, the outer end edge 34 in axis direction has round shape and can escape outward in radial direction as not to hitch in the movement of the pipe-guiding ring 40. And, plural (seven in Figure 6) notched grooves 36 are formed from the outer end edge 34 in the axis direction to prevent the plastic outer layer 8 from falling as a cut ring when the claw 28 bites into the compound pipe P.

In the present invention, not restricted to the above-described embodiments shown in Figures and modifiable, a composition in which a jumping piece, held within a slit of a C-shaped spring ring, jumps away outward in radial direction or inward in the axis direction when touched by the end portion of the pipe P, and the C-shaped spring ring fastens or bites the peripheral face of the pipe to firmly hold the pipe P in cooperation with the insertion cylinder portion, may be applied instead of the stop ring 26 to prevent the pipe P from being drawn out. And, a pipe joint, in which a concave peripheral hitching groove is formed by plastic work (with rotation) on the peripheral face of the end portion 1 of the pipe, may be used. In short, the above-mentioned pipe-guiding ring 40 shows excellent function and effect when the pipe joint is provided with the insertion cylinder portion 10 having the sealing material 14.

As described above, assembly (attachment) of the parts (the pipe-guiding ring 40) is easy, and piping and connection work are easily and rapidly completed by simple insertion of the pipe end portion 1 because in the pipe joint of the present invention, having a hollow chamber 3 of ring to which an end portion 1 of a pipe P to be connected is inserted and provided with an insertion cylinder portion 10 having a sealing material 14 fit to an inner peripheral face 9 of the end portion 1, a pipe-guiding ring 40, inserted to the hollow chamber 3 from outside and held as to be mounted to the insertion cylinder portion 10, is provided, an inner peripheral face 43 of the pipe-guiding ring 40 has a straight portion 44 on an outer side in an axis direction and a guiding tapered portion 45 on an inner side in the axis direction, and the pipe-guiding ring 40 has a sloped face 47, of which peripheral side inclines inward in the axis direction to an axis-orthogonal face 35, on an outer end face 46. Further, the corner portion 11 of the pipe P does not need chamfering and working efficiency of piping can be remarkably improved.

And, by the guiding of the pipe-guiding ring 40, the sealing material 14 is prevented from falling out of the sealing groove 13 and being damaged. Especially, the pipe-guiding ring 40 having the straight portion 44 and the tapered portion 45, keeping stable posture, smoothly passes over the sealing material 14 to make the pipe insertion easier. Further, even if the tip end face 4 of the pipe is cut obliquely, the strongly pressed portion shown with the two-dot broken line 33 in Figure 9 is deformed and moved inward in the axis direction to smoothly passes over the sealing material 14.

## Claims

1.  A pipe joint having a hollow chamber (3) of ring to which an end portion (1) of a pipe (P) to be connected is inserted, and provided with an insertion cylinder portion (10) having a sealing material (14) fit to an inner peripheral face (9) of the end portion (1), **characterized by** that a pipe-guiding ring (40), inserted to the hollow chamber (3) from outside and held as to be mounted to the insertion cylinder portion (10), is provided, an inner peripheral face (43) of the pipe-guiding ring (40) has a straight portion (44) on an outer side in an axis direction and a guiding tapered portion (45) on an inner side in the axis direction, and the pipe-guiding ring (40) has a sloped face (47), of which peripheral side inclines inward in the axis direction to an axis-orthogonal face (35), on an outer end face (46).

2.  The pipe joint as set forth in claim 1, wherein a positioning small convex ridge (31), to which an inner peripheral end edge (42) on an outer end of the pipe-guiding ring (40) hitches, is protruding from the insertion cylinder portion (10).

3.  The pipe joint as set forth in claim 1 or claim 2, wherein the hollow chamber (3) of ring is provided with a tapered face portion (25) for contraction diminishing in diameter outward in the axis direction, a stop ring (26) having a slit (27) in the periphery and claw (28) to bite into the peripheral face of the pipe is disposed in the hollow chamber (3), and the stop ring (26) is made of plastic.

4.  The pipe joint as set forth in claim 3, wherein a backup elastic ring (30) to elastically push the stop ring (26) outward in the axis direction and make the stop ring (26) contact the diminishing tapered face portion (25) is provided.

Fig. 1

Fig. 2

Fig. 3

Fig. 4

EP 1 995 506 A2

## Fig. 5A

## Fig. 5B

## Fig. 6

## Fig. 7

## Fig. 8

# Fig. 9

EP 1 995 506 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004324858 A